# EUROPEAN PATENT APPLICATION

(11) **EP 4 119 429 A1**
(43) Date of publication of application: **18.01.2023**
(21) Application number: 21382632.4
(22) Date of filing: 13.07.2021
(51) Int. Cl.: B62K 21/18

(54) **BIKE STEM**

(71) Applicant: Rojo Vidal, Cesar, 08019 Barcelona (ES)
(72) Inventor: Rojo Vidal, Cesar, 08019 Barcelona (ES)
(74) Representative: Cueto, Sénida

(57) **Abstract**

The invention relates to a stem or handlebar-stem assembly intended to be attached to the steering tube of a bicycle and to a fastening system of the stem to the steering tube by means of tightening. The stem (1) comprises a movable wedge-shaped part (3) and one or more bolts (4) that transmit a displacement to the wedge (3) to cause it to tighten against the steering tube. The wedge (3) and the bolts (4) are located in a front part of the stem (1). The invention provides an improved fastening solution, simultaneously presenting other additional advantages related to greater freedom of design of the stem (1) or of the handlebar-stem assembly, without compromising strength and rigidity thereof. It also provides greater safety and comfort associated with the front location of the fastening system.

## Description

### Technical field

This invention relates to the stem of a bicycle, more specifically to a system for fixing the stem or the handlebar-stem assembly to the steering tube of a bicycle.

### State of the art

The stem or handlebar post of a bicycle is the component that joins the handlebar to the steering tube and can be integrated with the handlebar or constitute a separate piece and there are different configurations also depending on how the connection with the steering tube is implemented, according to different types of bicycles.

An example of connection between the handlebar-stem assembly and the steering tube of a racing bicycle is disclosed in patent application US2016311497A1. This invention provides an improved connection system in relation to conventional solutions based on clamping the stem to the steering tube by means of external clamp systems and tightening bolts tangential to the steering tube. Alternatively, patent application US2016311497A1 proposes a fixing element housed inside the stem and provided with a series of protrusions. To achieve the fixing of the stem to the steering tube, a clamping force is exerted by acting on fixing means located at the rear of the stem from the rider's side. These fastening means comprise a couple of tightening bolts substantially orthogonal to the steering tube and intermediate pieces between the bolts and the inner fastener. This tightening system, proposed for a road bicycle in the exemplary embodiment in the figures of the patent application, could provide insufficient force when applied to other types of bicycles. On the other hand, the presence of the fastening system on the rider's side implies an increased volume at the rear of the stem where the loads exerted on the handlebar tend to be concentrated. Consequently, these loads exerted on the handlebar will tend to concentrate on the fastening bolts at the rear of the stem which constitutes a critical area. Due to these reasons, the solution disclosed in patent application US2016311497A1 is not considered suitable for all types of bicycles, such as mountain bikes, in which the rear area of the stem usually supports loads even greater than those of a road bicycle. Therefore, this solution tends to be obsolete at present.

In general terms, the presence of fastening systems at the rear of the bicycle stem, to connect the stem to the steering tube, implies an unwanted increase in volume in the area and a risk for the rider who may hit the knees against that area during performance.

It is an objective of the invention to provide an alternative fastening system, to connect the stem or the handlebar-stem assembly to the steering tube of a mountain bike or other type of bicycle, which improves the mentioned limitations.

### Brief description of the invention

It is an object of the invention an improved fastening system to connect the stem or the handlebar-stem assembly of a bicycle to the steering tube. The stem or handlebar-stem assembly has the particularity of comprising a movable wedge-shaped piece provided with a face tilted with respect to the longitudinal axis of the steering tube when the stem is attached to the steering tube. The stem is additionally provided with at least one bolt capable of transmitting a displacement to the wedge in a direction that is parallel to its tilted face in order to cause the wedge to tighten against the steering tube. The fastening system formed by the wedge and the bolt or bolts is located in a front part of the stem, ahead of the steering tube, when both stem and steering tube components are assembled, making it possible the attachment of the stem from the front part of the handlebar or the handlebar-stem assembly of the bicycle.

Thanks to the configuration of the fastening system of the invention, adequate tightening is achieved by means of the sliding of the wedge in such a way that the risk of the fastening loosening is minimized, in relation to conventional tightening systems. Preferably, the bolts have a tilted arrangement with a longitudinal axis substantially parallel to the tilted face of the wedge for optimal fastening.

The location of the fastening mechanism at the front of the stem is advantageous, allowing for a cleaner-aesthetically styled rear area of the stem, reducing the volume of the rear area of the stem and gaining available space for the knees of the rider. The comfort of the rider experience is increased. The design of the invention also improves safety, since it eliminates the risk of friction or hitting the rider's knees with possible sharp edges that the tightening bolts or other members of the fastening systems usually have, when these members are located at the rear of the stem as in conventional solutions.

On the other hand, as already mentioned previously, the rear area of the stem constitutes a critical area since it usually must withstand more mechanical stress receiving greater loads while using the bicycle. In conventional solutions that locate fastening members in this area, the continuity of the manufacturing material is interrupted, leading to a decrease in the strength and rigidity of the stem. The solution of the invention provides an improvement in the resistance of this critical component, such as the stem or the handlebar-stem assembly of the bicycle. The rear portion of the stem is devoid of discontinuities and this allows to improve the rigidity and resistance of the component. In stems manufactured, for example, using composite materials such as carbon fibre, commonly used in this type of component, the fibres of the material are allowed to retain their continuity without cuts, thus contributing to a greater resistance of the component.

Thanks to this continued and simplified configuration of the resulting stem or handlebar-stem assembly, greater flexibility is also provided for the design of these components.

In the context of the present invention and throughout the detailed description set forth below, the term "stem" refers both to a stem independent of the handlebar of a bicycle and to a stem integrated with the handlebar forming a handlebar-stem assembly.

### Brief description of the drawings

The details of the invention can be seen in the accompanying figures, although these are not intended to be limiting of the scope of the invention:
- Figure 1 shows a rear perspective view of a particular embodiment of the invention in which the handlebar and the stem are integrated.
- Figure 2 shows a front perspective view of the handlebar-stem assembly of Figure 2.
- Figure 3 shows a top view of the handlebar-stem assembly of Figure 1.
- Figure 4 shows a front view of the handlebar-stem assembly of Figure 1.
- Figures 5A and 5B respectively show sections AA and BB of the handlebar-stem assembly marked in Figures 3 and 4.
- Figure 5C shows the internal configuration of the stem of Figure 1.
- Figure 6 shows an inner view of the central portion of the handlebar-stem assembly of Figure 1, in which an upper portion of the assembly has been removed to allow the visualization of the components of the stem fastening system to the steering tube.
- Figure 7 shows an exploded view of the components of the fastening system corresponding to the embodiment of Figure 1.
- Figures 8A-8F show respectively a front perspective, a bottom perspective, a lateral view, a sectional view, a bottom view and a rear view of the wedge of Figure 1.
- Figure 9 shows a stem separate from the handlebar, also compatible with the solution of the invention.
- Figure 10 shows a cross sectional view of a second embodiment of the invention, wherein the fastening system is implemented in the separate stem of Figure 9.
- Figure 11 shows an exploded cross-sectional view of the stem and fastening system of Figure 10.
- Figure 12 shows an additional section illustrating the connection of the components of the stem fastening system of Figure 10 to the steering tube.
- Figure 13 shows an exploded perspective view of the stem of Figure 10.
- Figures 14A-14C and 15A-15C show alternative variants for the components of the stem fastening system to the steering tube.

### Detailed description of the invention

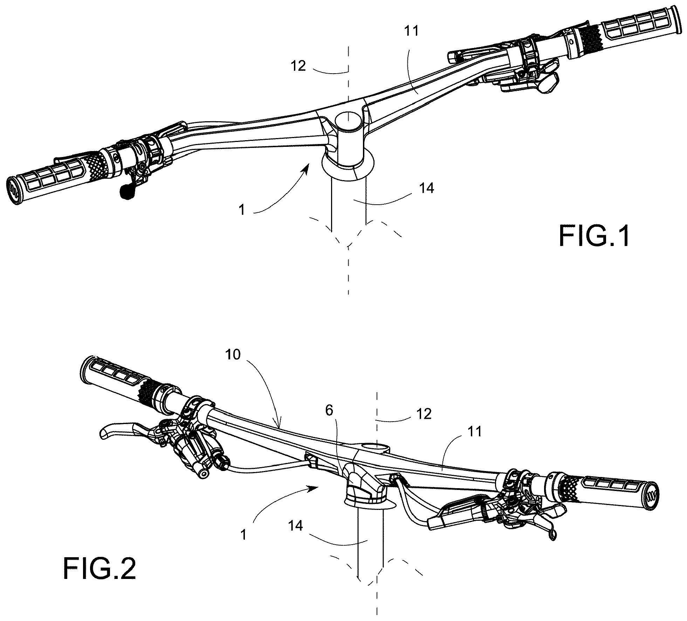

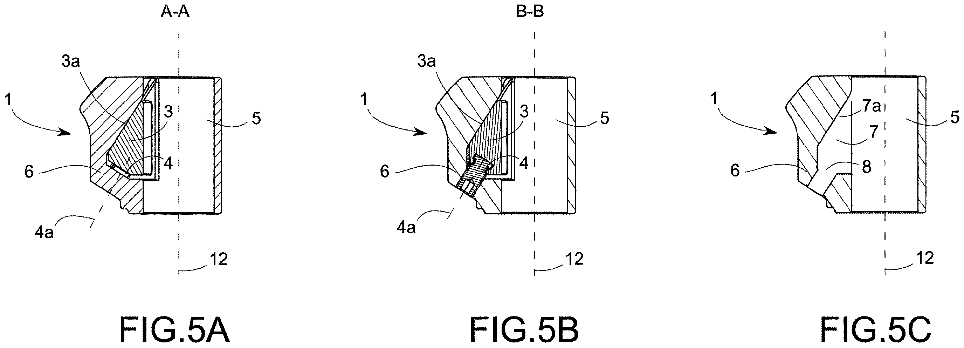

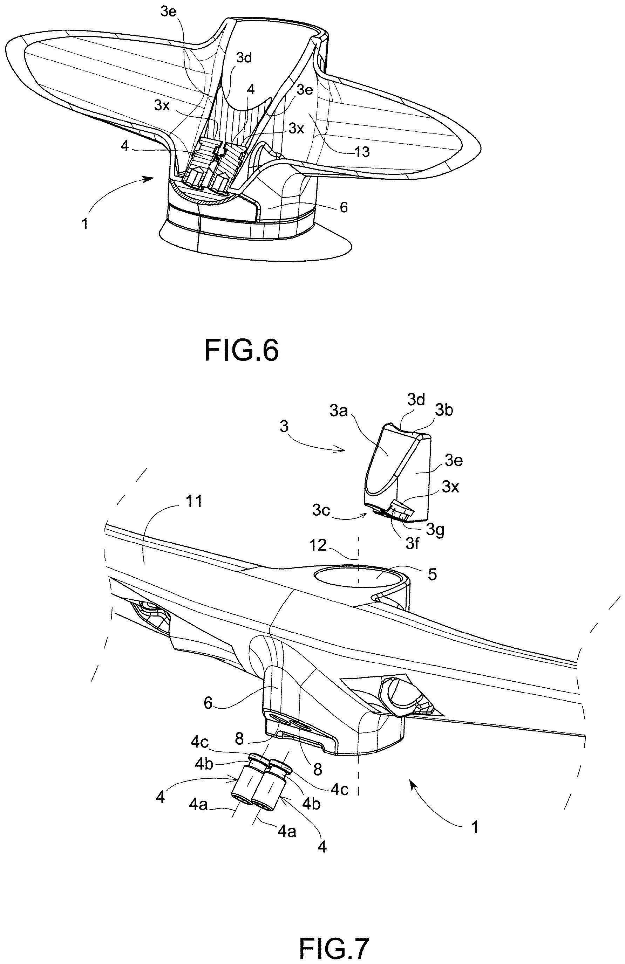

Figures 1 to 8 illustrate a particular example of an embodiment of the stem of a bicycle according to the invention, wherein the handlebar and the stem are integrated. Figures 1, 2, 3 and 4 are views of the rear, front and upper portions of the assembly formed by the handlebar and the stem of this particular embodiment. As shown in figures, the illustrated handlebar-stem assembly (10) incorporates a stem (1) integrated with the bicycle handlebar (11). The stem (1) is provided with an improved fastening system for its connection to the steering tube (14). Figures 5A, 5B, 5C and 6 show the particular features of the invention, since they illustrate in detail the structural configuration and the relative arrangement of the components of the proposed fastening mechanism.

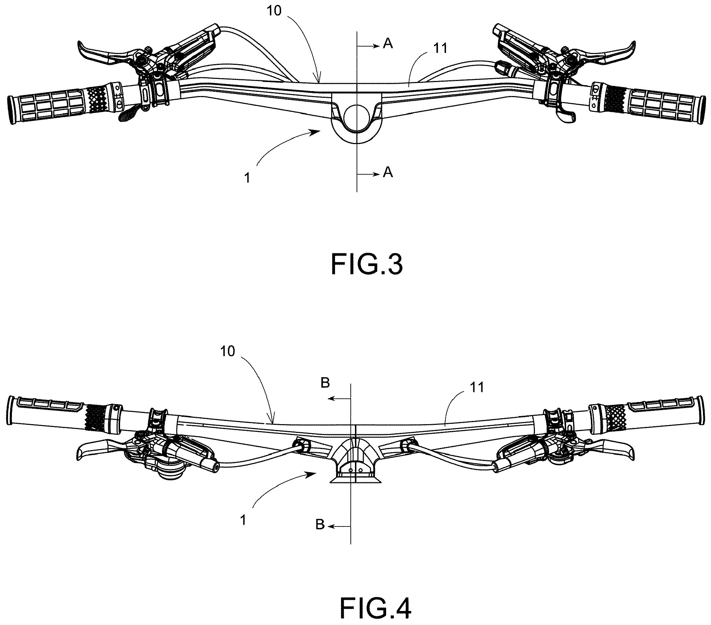

As in other conventional bicycles, the stem (1) is the part intended to connect the handlebar (11) or the handlebar-stem assembly (10) to the steering tube (14) of the bicycle schematically represented in Figs. 1 and 2. The invention refers to a stem (1) provided with a fastening system characterized in that it comprises a movable wedge-shaped part and one or more bolts (4) that transmit a displacement to the wedge (3) causing it to tighten against the steering tube (14). Figures 5A and 5B illustrate the sections AA and BB of the handlebar-stem assembly marked in Figs. 3 and 4. As can be seen in the embodiment of figures, the movable wedge (3) according to the invention comprises a tilted face (3a) that forms a certain angle with the longitudinal axis (12) of the steering tube (14) when the stem (1) is attached to the steering tube (14).

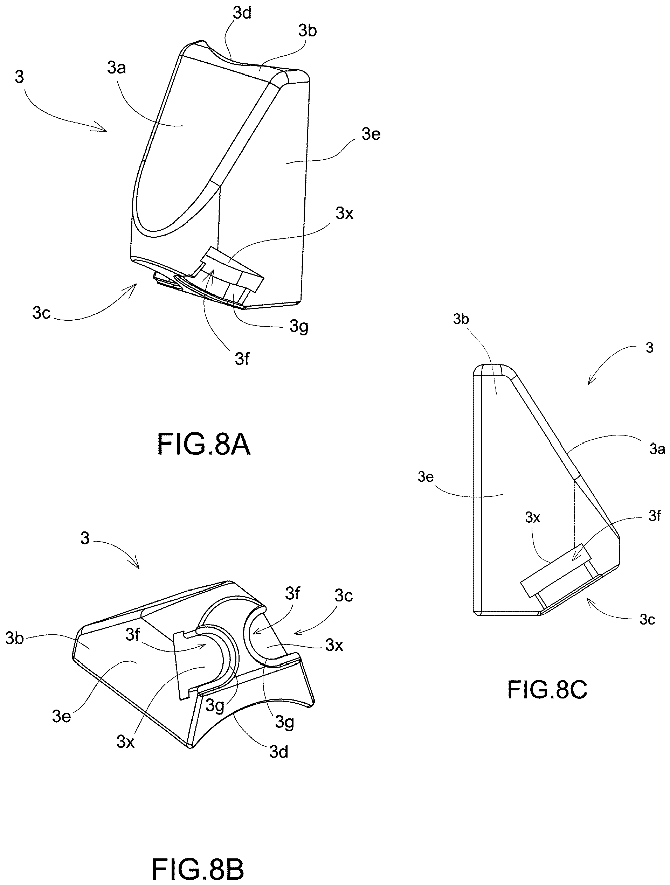

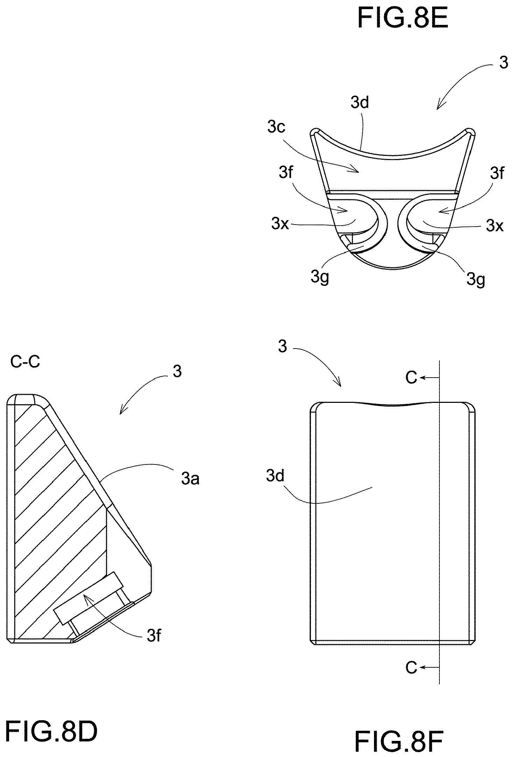

The optional structural features of a particular embodiment of the wedge (3) can be seen in Fig. 6 and in the exploded view of Fig. 7. Optionally, as shown in Fig. 8A to 8F in greater detail, the wedge (3) is a triangular prism and its geometry includes a narrower end or upper portion (3b) and a connecting portion (3c). This connecting portion (3c) is located in an area of the wedge (3) opposite to the upper portion (3b) and comprises at least one contact surface (3x) with each of the fastening bolts (4), being this contact surface (3x) perpendicular to the tilted face (3a). The wedge (3) also comprises a concave face (3d), for example cylindrical in shape, which extends vertically from the upper portion (3b) towards the bottom portion of the wedge (3) in a direction parallel to the steering tube (14) when the stem (1) is attached to the steering tube (14). This concave face (3d) is therefore configured to contact and adapt to the steering tube (14). In the particular embodiment of figures, the wedge (3) is also delimited by two lateral sides (3e) that are arranged and in contact with the respective inner side walls (13) of the handlebar-stem assembly (10). Two additional sides, vertical front and horizontal lower, with a smaller dimension, complete the superficial perimeter of the wedge (3).

Preferably, the stem (1) is provided with one or more bolts (4) that have a tilted arrangement, exerting a thrust force parallel to the tilted face (3a) over the contact surfaces (3x) of the connecting portion (3c) of the wedge (3) and transmitting a displacement to the wedge (3) in a direction that is parallel to said tilted face (3a). This particular orientation of the bolts (4) provides a suitable solution, minimizing the risk of the fixation loosening. In the embodiment of Figures 1-8, the stem (1) specifically has two bolts (4) which longitudinal axis (4a) is substantially parallel to the tilted face (3a) of the wedge (3) as can be seen in Fig. 5B.

Other embodiments of the invention are contemplated in which the geometry of the wedge (3) may vary. The orientation of the tightening bolts (4) in relation to the tilted face (3a) of the wedge (3) can also be different. Thus, in other embodiments of the invention other than that illustrated in the figures, the bolts (4) can optionally have a vertical or horizontal arrangement. These alternative orientations of the bolts (4) are compatible with the invention to the extent that the bolts (4) allow the wedge (3) to slide and tighten against the steering tube (14).

On the other hand, in the stem (1) according to the invention, the wedge (3) and the bolts (4) are located in a front part of the stem (1), ahead of the steering tube (14), when the stem (1) is attached to the steering tube (14). This location implies the various advantages already mentioned, regarding a greater design freedom, improved safety and increased stiffness and resistance of the stem (1) or of the handlebar-stem assembly (10).

Also optionally, as seen in Figs. 8A-8E, the wedge (3) comprises at least one lateral cavity (3f) located in the connecting portion (3c). The lateral cavity (3f) is configured and adapted to receive an end portion (4c) of the bolt (4) allowing the actuation of said bolt (4) for the thrust of the wedge (3). Each of these lateral cavities (3f) is delimited at the top by a contact surface (3x) and at the bottom by a projection or lip (3g). Optionally, the bolts (4) comprise a recess (4b) that defines the end portion (4c). The lip (3g) is engaged in the recess (4b) and the terminal portion (4c) is engaged in the lateral cavity (3f). This way, the fastening system is capable of implementing a retention function of the wedge (3), preventing its fall and facilitating assembly.

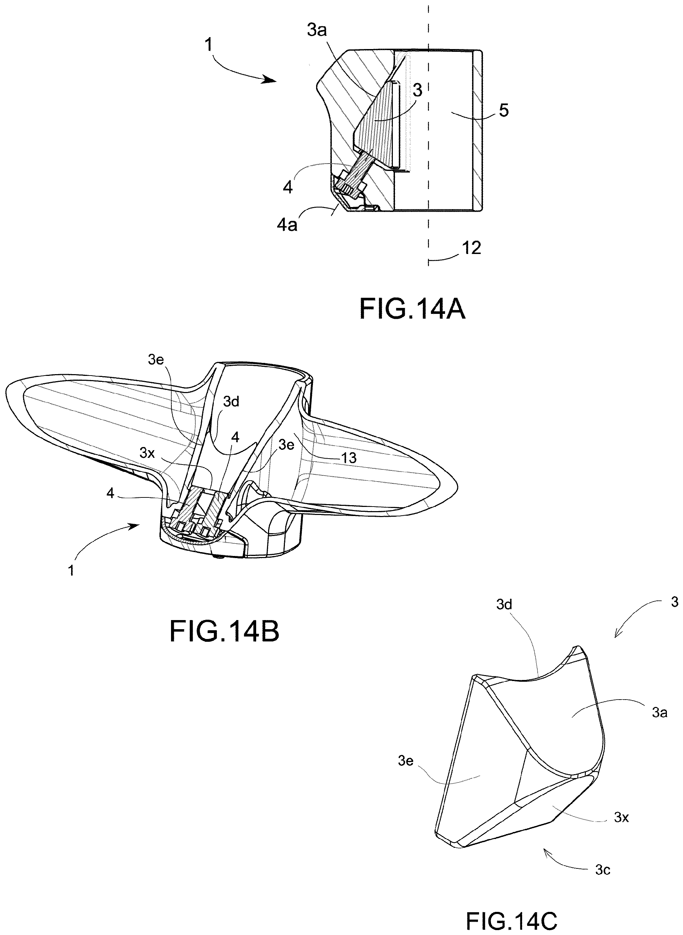

In the embodiment of Figures 1-8, the bolts (4) exert pressure on the surfaces (3x) causing the wedge (3) to slip. In other different embodiments, as for example in the variant of Figures 14A-14C, the wedge (3) is devoid of lateral cavities (3f) and conventional bolts (4) are used to exert a thrust force directly on an external face of the wedge (3).

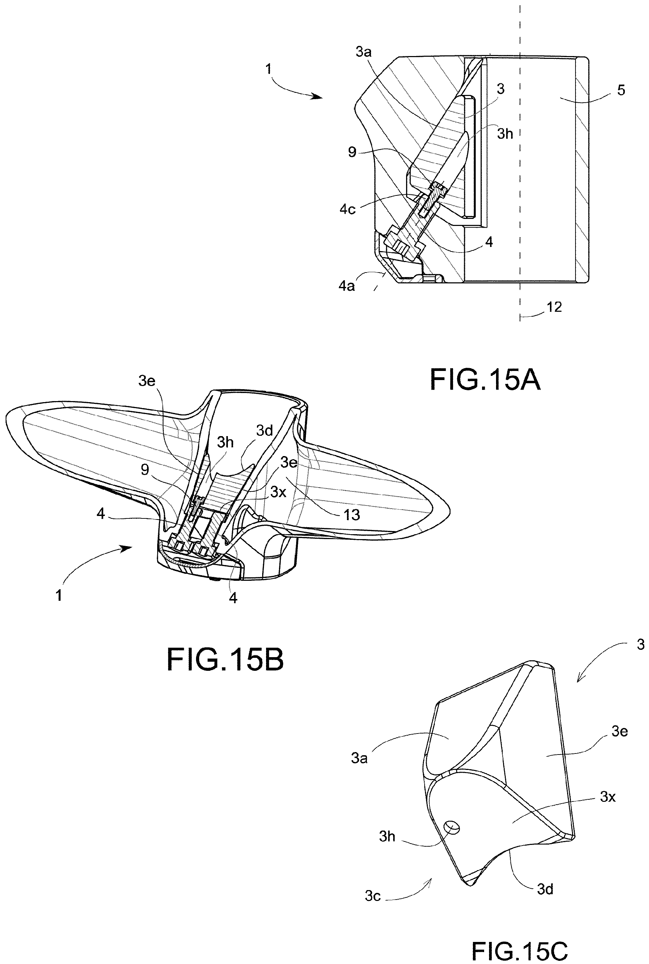

Embodiments like that depicted in Figures 15A-15C are also coherent with the invention. In this variant, the wedge (3) is additionally provided with a through hole (3h) that extends from the connecting portion (3c) to the concave face (3d). Additionally, one of the bolts (4) has a thread in its end portion (4c) that allows its connection to an additional bolt (9) with a smaller size inserted through the through hole (3h). This way, the bolt (4) is held by the additional bolt (9), constituting this variant an alternative solution to facilitate disassembly by preventing the wedge (3) from falling.

As other conventional solutions, the stem (1) includes a bore (5) configured to house the steering tube (14). Optionally, the stem (1) comprises a protrusion (6) extending from the bore (5) towards a front area of the stem (1) and housed below the handlebar (11), so that the wedge (3) and bolts (4) are at least partially located inside the protrusion (6). Also optionally, the protrusion (6) is hidden without projecting frontally in relation to the handlebar (11), as can be seen in Fig. 3. The described configuration is aesthetic since the tightening bolts (4) are hidden from view, in addition to not interfering with the rider's legs because they are located in the front part of the stem (1).

The stem (1) comprises internally an inner hollow intended to facilitate the fitting of the components of the fastening system (see Fig. 5C). In the particular embodiment of Figures 1-8, this inner hollow comprises a main housing (7) which is configured to accommodate the wedge (3) and two through holes (8) communicating the main housing (7) with the exterior of the stem (1). The function of these holes (8) is to receive and accommodate the bolts (4) with the appropriate orientation, allowing the user the access to said bolts (4) from the exterior of the stem (1) to actuate the fastening mechanism. The main housing (7) is delimited at its upper part by a tilted surface (7a) parallel to the tilted face (3a) of the wedge (3), so that a relative sliding occurs between the tilted surfaces (3a, 7a) as a result of the actuation of the bolts (4) accessible from the front of the stem (1). This tilted surface (7a) exerts pressure through the wedge (3) on the steering tube (14). The main housing (7) and the holes (8) are at least partially located inside the protrusion (6) in the described exemplary embodiment.

Optionally, the stem (1) of the invention can be integrated with the handlebar (11) of the bicycle forming a handlebar-stem assembly (10) as in the embodiment of Figures 1 to 8.

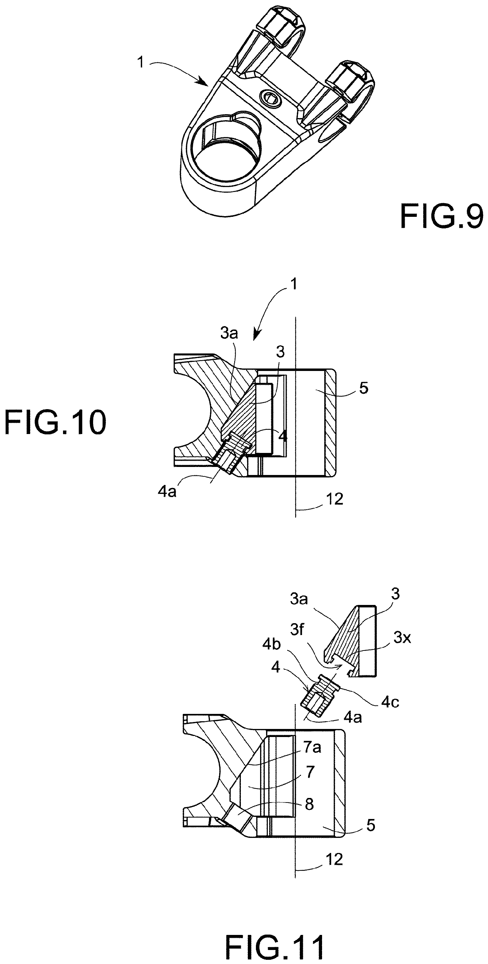

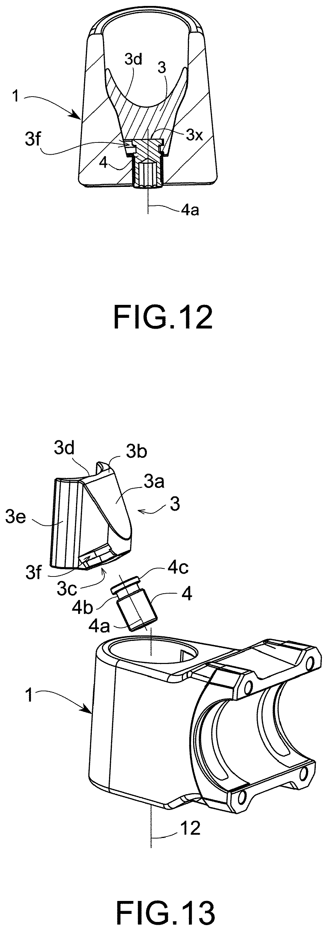

In other embodiments of the invention, the stem (1) may constitute a separate part of the handlebar (11) of the bicycle. An example of this second embodiment is illustrated in Figures 9 to 13. As shown in figures, the stem (1) also includes the essential features of the invention, being provided with a fastening system having a movable wedge-shaped part (3) and a single bolt (4) in this case, which transmits a displacement to the wedge (3) causing it to tighten against the steering tube. The wedge (3) and bolt (4) are located in a front part of the stem (1) ahead of the steering tube. Other optional features, which are also present in this embodiment, can be seen in Figs. 10 to 13, regarding the optional configuration of the wedge (3), the housing (7) and the bolt (4) indicated by the same numerical references.

The invention also refers to the fastening system of a stem (1) to a steering tube (14) of a bicycle, the system having the particular feature of comprising a movable wedge-shaped part (3) and at least one bolt (4) capable of transmitting a displacement to the wedge (3) in a direction that is parallel to a tilted face (3a) of the wedge (3) to cause the wedge (3) to tighten against the steering tube (14).

## Claims

1. Stem (1) intended to be attached to the steering tube (14) of a bicycle, **characterized in that** it comprises:
- a movable wedge-shaped part (3) provided with a tilted face (3a) with respect to a longitudinal axis (12) of the steering tube (14) when the stem (1) is attached to the steering tube (14), and
- at least one bolt (4) capable of transmitting a displacement to the wedge (3) in a direction that is parallel to the tilted face (3a) to cause the wedge (3) to tighten against the steering tube (14), wherein
- the wedge (3) and the bolt (4) or bolts (4) are located in a front part of the stem (1) ahead of the steering tube (14) when the stem (1) is attached to the steering tube (14).

2. Stem (1), according to claim 1, wherein the bolt (4) or bolts (4) have a tilted arrangement with a longitudinal axis (4a) parallel to the tilted face (3a) of the wedge (3).

3. Stem (1), according to claim 1, wherein the wedge (3) comprises at least one contact surface (3x) with each bolt (4), being this contact surface (3x) perpendicular to the tilted face (3a).

4. Stem (1), according to claim 3, wherein the wedge (3) comprises at least one lateral cavity (3f) delimited at the top by the contact surface (3x) and at the bottom by a lip (3g), being the lateral cavity (3f) adapted to receive an end portion (4c) of the bolt (4) allowing the actuation of said bolt (4) for the thrust of the wedge (3).

5. Stem (1), according to claim 4, wherein the bolt (4) comprises a recess (4b) that defines the end portion (4c), being the lip (3g) at least partially engaged in the recess (4b) and the end portion (4c) at least partially engaged in the lateral cavity (3f).

6. Stem (1), according to claim 1, wherein the wedge (3) comprises a connecting portion (3c) that is perpendicular to the tilted face (3a), a concave face (3d) extending vertically in a direction that is parallel to the steering tube (14) and a through hole (3h) that extends from the connecting portion (3c) to the concave face (3d), wherein, in addition, a bolt (4) is threaded to an additional bolt (9) inserted through the through hole (3h).

7. Stem (1), according to claim 1, comprising a main housing (7) configured to accommodate the wedge (3) and at least one hole (8), the main housing (7) communicating with the exterior of the stem (1) and intended to accommodate the bolt (4), the main housing (7) being delimited at the top by a tilted surface (7a) that is parallel to the tilted face (3a) of the wedge (3).

8. Stem (1), according to claim 1, wherein the bolt (4) or bolts (4) have a vertical or horizontal arrangement.

9. Stem (1), according to claim 1, wherein the stem (1) constitutes a separate part of the handlebar (11) of the bicycle.

10. Stem (1), according to claim 1, wherein the stem (1) is integrated with a handlebar (11) of the bicycle forming a handlebar-stem assembly (10).

11. Stem (1), according to claim 10, provided with two bolts (4) having a tilted arrangement with a longitudinal axis (4a) that is parallel to the tilted face (3a) of the wedge (3), comprising the stem (1) a bore (5) configured to accommodate the steering tube (14) and a protrusion (6) extending from the bore (5) towards a front area of the stem (1), the protrusion (6) being housed below the handlebar (11) and with the wedge (3) and the bolts (4) being at least partially located inside the protrusion (6).

12. Stem (1) according to claim 11, comprising a main housing (7) configured to accommodate the wedge (3) and two holes (8), the main housing (7) communicating with the exterior of the stem (1) and intended to accommodate the bolts (4), the main housing (7) being delimited at the top by a tilted surface (7a) that is parallel to the tilted face (3a) of the wedge (3) and being the main housing (7) and the holes (8) located at least partially inside the protrusion (6).

13. Stem (1), according to claim 12, wherein the protrusion (6) is hidden without projecting frontally with respect to the handlebar (11).

14. Fastening system of a stem (1) to a steering tube (14) of a bicycle, **characterized in that** it comprises a movable wedge-shaped part (3), provided with a tilted face (3a) with respect to a longitudinal axis (12) of the steering tube (14) when the stem (1) is attached to the steering tube (14), and at least one bolt (4) capable of transmitting a displacement to the wedge (3) in a direction that is parallel to the tilted face (3a) to cause the wedge (3) to tighten against the steering tube (14).
